# EUROPÄISCHE PATENTSCHRIFT

(11) **EP 2 462 809 B1**
(45) Veröffentlichungstag und Bekanntmachung des Hinweises auf die Patenterteilung: **24.04.2019**
(21) Anmeldenummer: 11192760.4
(22) Anmeldetag: 09.12.2011
(51) Int. Cl.: A21B 3/04, F24C 15/32

(54) **DAMPFGARGERÄT**
STEAMING OVEN
APPAREIL DE CUISSON À VAPEUR

(30) Priorität: 13.12.2010 EP 10290651
(43) Veröffentlichungstag der Anmeldung: 13.06.2012
(73) Patentinhaber: BSH Hausgeräte GmbH, 81739 München (DE)
(72) Erfinder: Clauss, Christian, 67210 Obernai (FR)

(56) Entgegenhaltungen:
- EP-A1- 1 607 684
- WO-A1-2005/015088

## Beschreibung

Die Erfindung betrifft ein Dampfgargerät, aufweisend eine Gargerätemuffel, welche einen mit Dampf beaufschlagbaren Garraum begrenzt, wobei sich mindestens eine Wassereinlassöffnung und mindestens eine Dampfauslassöffnung in den Garraum öffnen.

DE 19843 842 A1 betrifft ein druckloses Dampfgargerät mit einer Steuerelektronik, einem mindestens einen Heizkörper zum Erhitzen von Wasser enthaltenen Dampferzeuger und mit einem Gargut aufnehmenden Garraum, mit einem Garraumboden als Auffangvorrichtung für Kondensat. Um ein Dampfgargerat zu schaffen, bei dem eine Konden-satvermehrung im Garraumbereich verhindert und der Nachsorgeaufwand möglichst gering gehalten wird, erfolgt eine Trennung des vom Gargut und des von den Garraumwänden abtropfenden Kondensates. Das von den Garraumwänden stammende Kondensat ist unverschmutzt und ein am Garraumboden angeordnetes Heizelement mit einer den Garprozess nicht beeinflussenden Wirkung führt das Kondensat in Form von Dampf wieder dem Garprozess zu.

EP 1 607 684 A1 und WO2005015088 offenbaren eine Hochfrequenz-Heizvorrichtung mit einer Dampferzeugungsfunktion, mittels welcher eine Zeit bis zur Verdampfung auftropfenden Wassers deutlich erhöht werden kann, wenn das Wasser auf eine Verdunstungsschale aufgetropft wird und ein Erhitzungswirkungsgrad hoch ist. In einer Hochfrequenz-Heizvorrichtung mit einer Dampferzeugungsfunktion, die einen Hochfrequenz-Generator und einen Dampferzeuger mit einer Verdunstungsschale auf der Bodenfläche einer Heizkammer, in der ein Aufheiztarget gelagert ist und eine Heizeinrichtung zum Erwärmen der Verdampfung vorhanden ist, um Dampf in der Heizkammer zu erzeugen, wird die Heizvorrichtung als eine Heizvorrichtung mit einem umhüllten Heizer, in einer Aluminium-Druckguss eingebettet ist, ausgebildet, und die Heizvorrichtung ist direkt an einer Rückseite der Verdunstungsschale angebracht.

Es ist die **Aufgabe** der vorliegenden Erfindung, ein verbessertes Dampfgargerät bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Dampfgargerät, aufweisend eine Gargerätemuffel, welche einen mit Dampf beaufschlagbaren Garraum begrenzt, wobei sich mindestens eine Wassereinlassöffnung und mindestens eine Dampfauslassöffnung in den Garraum öffnen. Die mindestens eine Wassereinlassöffnung und die mindestens eine Dampfauslassöffnung sind ineinander in einer kombinierten Durchlassöffnung integriert. Dadurch kann auf eine dedizierte Dampfauslassöffnung verzichtet werden, was eine verbesserte Dampfdichtigkeit, einfachere Reinigung und preiswertere Ausgestaltung ermöglicht. In anderen Worten ist ein Wassereinlass auch als ein Dampfauslass eingerichtet und vorgesehen. Der mindestens eine Durchlass ist somit ein kombinierter Wassereinlass/ Dampfauslass-Durchlass.

Es ist die erfindungsgemäße Ausgestaltung, dass die kombinierte Durchlassöffnung mittels eines Fluidkanals gebildet wird, welcher hinter der Durchlassöffnung einen kombinierten Dampf/Wasser-Führungsabschnitt aufweist, wobei sich der Dampf/Wasser-Führungsabschnitt in einen Dampfablasszweig und eine Wasserführungszweig aufteilt. Während in dem Garraum befindlicher Dampf somit über den Dampf/Wasser-Führungsabschnitt und den Dampfablasszweig nach Außen abgeführt werden kann, kann gleichzeitig oder abwechselnd Wasser durch den Wasserführungszweig und durch den Dampf/Wasser-Führungsabschnitt in den Garraum geleitet werden. Dadurch ergibt sich der Vorteil, dass auf eine einfache Weise eine gemeinsame Führung von Dampf und Wasser in dem Dampf/Wasser-Führungsabschnitt und eine einfache Trennung von Dampf und Wasser dahinter ermöglicht werden. Zudem ergibt sich der Vorteil, dass der Dampf/Wasser-Führungsabschnitt wie ein Wärmetauscher zwischen dem Dampf und dem Wasser wirkt und einerseits das Wasser vorwärmt, was eine Energieeinsparung bewirkt, und andererseits den Dampf zumindest teilweise kondensiert und so hilft, Wasser einzusparen.

Der Dampfablasszweig kann insbesondere nach Außen führen, ggf. über ein Abzugsgebläse. Der Dampfablasszweig kann insbesondere von dem Wasserführungszweig nach oben abgehen.

Es ist die erfindungsgemäße Ausgestaltung, dass der Wasserführungszweig über eine Pumpe mit einem Wasserreservoir verbunden ist und dass der Wasserführungszweig und/oder der Dampf/Wasser-Führungsabschnitt einen Scheitelpunkt oder höchsten Punkt bilden, welcher höher liegt als ein maximal erlaubter Wasserpegel des Wasserreservoirs. So kann ein unbeabsichtigter Fluss von Wasser in den Garraum bei einer deaktivierten und in diesem Zustand nicht dichten Pumpe verhindert werden. Der Scheitelpunkt wird bevorzugt durch den oder in dem Wasserführungszweig gebildet. Der Scheitelpunkt kann insbesondere ein höchster Punkt eines umgekehrt U-förmigen Abschnitts sein.

Bei einem ausreichend höher liegenden Wasserreservoir kann auch auf die Pumpe verzichtet werden und/oder anstelle der Pumpe z.B. ein Ventil vorgesehen sein. Anstelle des Wasserreservoirs kann auch ein Frischwasseranschluss o.ä. verwendet werden.

Es ist eine Ausgestaltung, dass der Fluidkanal mittels eines Schlauchs gebildet wird.

Der Schlauch kann beispielsweise in einer Öffnung in der Gargerätemuffel eingesteckt sein. Die Verwendung des Schlauchs benötigt besonders wenige Teile und ist entsprechend einfach zu montieren sowie preiswert. Alternativ können ein Rohr oder ein Rohrsystem verwendet werden.

Es ist eine Weiterbildung, dass das Dampfgargerät einen in dem Garraum befindlichen, durch Wasser aus der Wassereinlassöffnung befüllbaren Wasseraufnahmebereich aufweist. Dieser kann besonders einfach und platzsparend hergestellt werden und insbesondere beheizbar sein.

Es ist noch eine Weiterbildung, dass die Durchlassöffnung garraumseitig im Wesentlichen flächenbündig zu der sie umgebenden Wand der Gargerätemuffel angeordnet. Dadurch können Schmutzablagerung an dem Durchlass vermieden werden, wie sie typischerweise bei herkömmlichen stutzenförmigen Wassereinlässen auftreten. Zudem ist der flächenbündige Durchlass gut reinigbar, insbesondere abwischbar. Darüber hinaus ergibt sich eine klarere und hochwertigere Anmutung.

Es ist auch eine Weiterbildung, dass die Durchlassöffnung hinter einem in den Garraum ragenden Körper angeordnet ist. Dadurch kann eine Beschädigung der Durchlassöffnung verhindert werden, z.B. verursacht durch Gargeschirr. Insbesondere für diesen Fall kann sich die Durchlassöffnung in einer Seitenwand in einer Nähe einer Rückwand befinden.

Es ist eine spezielle Ausgestaltung, dass der Körper eine Auflage für einen Gargutträger ist. So kann auf einen dedizierten Körper verzichtet werden. Der Gargutträger kann z.B. eine in einer Seitenwand der Garraummuffel eingeprägte Auflage oder eine Schiene eines Ablagegitters sein. Die die Durchlassöffnung schützende Auflage und/oder Schiene können dann im Vergleich zu anderen Auflagen und/oder Schienen verkürzt sein.

Es ist ferner eine Ausgestaltung, dass die Wand, an welcher die Durchlassöffnung angeordnet ist, eine Seitenwand ist. Dies verbessert eine Anmutung weiter.

Es ist außerdem eine Ausgestaltung, dass die Wasseraufnahmeschale mittig in einem Boden der Gargerätemuffel ausgebildet ist. So kann eine räumlich gleichmäßige Bedampfung erreicht werden.

Es ist noch eine weitere Ausgestaltung, dass die Wasseraufnahmeschale in die Gargerätemuffel eingeprägt ist. So wird eine einfache Herstellung ermöglicht.

Der Wasseraufnahmeschale kann eine dedizierte Heizung zu ihrer Erwärmung zugeordnet sein, insbesondere an ihrer Unterseite.

Es ist noch eine weitere Ausgestaltung, dass die Gargerätemuffel für aus der Durchlassöffnung in den Garraum fließendes Wasser rinnenlos (ohne eine Rinne zur Wasserführung von der Durchlassöffnung zu der Wasseraufnahmeschale) ausgestaltet ist. So wird eine einfachere und preiswertere Ausgestaltung der Gargerätemuffel als auch eine bessere Reinigbarkeit ermöglicht.

Das Dampfgargerät kann ein reiner Dampfgarer oder ein Kombinationsgerät mit einer Dampfgarfunktion sein, z.B. ein Backofen mit einer Dampfgarfunktion.

In den folgenden Figuren wird die Erfindung anhand eines Ausführungsbeispiels schematisch genauer beschrieben.
- Fig.1: zeigt als Schnittdarstellung in Vorderansicht ein erfindungsgemäßes Gargerät;
- Fig.2: zeigt das erfindungsgemäße Gargerät als Schnittdarstellung in Seitenansicht;
- Fig.3: zeigt als Schnittdarstellung in Vorderansicht ein Gargerät mit einer kombinierten Dampf/Wasser-Führung gemäß einer Ausgestaltung, die nicht Teil des Schutzumfangs ist; und
- Fig.4: zeigt als Schnittdarstellung in Vorderansicht das erfindungsgemäße Gargerät mit einer kombinierten Dampf/Wasser-Führung gemäß der erfindungsgemäßen Ausgestaltung.

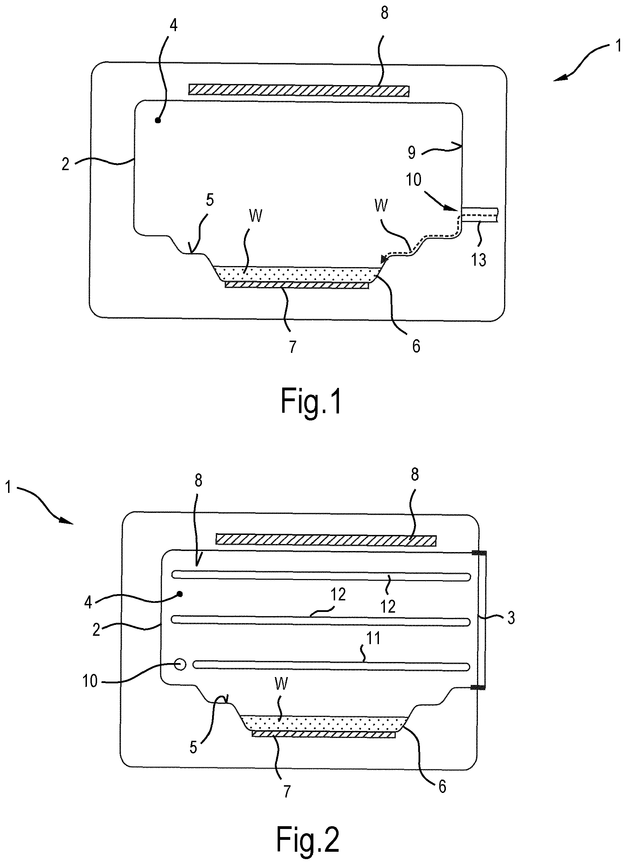

**Fig.1** zeigt als Schnittdarstellung in Vorderansicht ein Dampfgargerät 1. Fig.2 zeigt das Dampfgargerät 1 als Schnittdarstellung in Seitenansicht. Das Dampfgargerät 1 ist hier ein Backofen mit einer Dampfgarfunktion. Das Dampfgargerät 1 weist eine Gargerätemuffel 2 auf, welche zusammen mit einer vorderseitig angebrachten Tür 3 einen Garraum 4 begrenzt. Ein Boden 5 der Gargerätemuffel 2 weist einen mittigen, schalenförmig vertieften Wasseraufnahmebereich 6 zur Aufnahme von zu verdampfendem Wasser W auf. Der Wasseraufnahmebereich 6 ist in den Boden 5 eingeprägt. An einer Unterseite des Bodens 5 ist eine Heizung 7 vorhanden.

Zum Dampfgaren wird die Heizung 7 aktiviert, um das in dem Wasseraufnahmebereich 6 befindliche Wasser W zu verdampfen und so den Garraum 4 mit Dampf zu beaufschlagen. Für eine Regelung einer Feuchtigkeit in dem Garraum 4 kann z.B. ein Luftfeuchtigkeitsfühler (o.Abb.) vorhanden sein. Die Heizung 7 kann alternativ, falls sich kein Wasser W in dem Wasseraufnahmebereich 6 befindet, als eine Unterhitze einer Backofenbetriebsart verwendet werden, ggf. zusammen mit einer Oberhitze 8 (d.h., einem oder mehreren Oberhitzeheizkörpern).

Für eine Befüllung des Wasseraufnahmebereichs 6 mit Wasser W befindet sich in einem unteren und hinteren Bereich einer Seitenwand 9 der Gargerätemuffel 2 eine als eine Wassereinlassöffnung dienende Durchlassöffnung 10 zum Einlass von Wasser W in den Garraum 4. Die Durchlassöffnung 10 ist garraumseitig im Wesentlichen flächenbündig zu der sie umgebenden Seitenwand 9 angeordnet. Aus der Durchlassöffnung 10 in den Garraum 4 einfließendes Wasser W fließt zunächst an der Seitenwand 9 herunter und weiter über einen Seitenbereich des Bodens 5 in den Wasseraufnahmebereich 6, wobei der Wasseraufnahmebereich 6 einen tiefsten Punkt des Bodens 5 darstellt. Dabei ist hier keine dedizierte Wasserführungsrinne vorgesehen, sondern das Wasser W fließt frei in den Wasseraufnahmebereich 6 wie durch den gepunkteten Pfeil angedeutet. Möglicherweise außerhalb des Wasseraufnahmebereichs 6 geringe abstehende Mengen des Wassers W verdampfen typischerweise während des Dampfgarens mit.

Wie in Fig.2 gezeigt, ist die Durchlassöffnung 10 hinter einer in den Garraum 4 ragenden Auflage 11 für einen Gargutträger (o.Abb.) angeordnet. Diese Auflage 11 dient als ein Schutzelement gegenüber eine Beschädigung und/oder Verschmutzung der Durchlassöffnung 10. Diese Auflage 11 ist gegenüber Auflagen 12 auf anderen Einschubebenen entsprechend verkürzt.

Die Durchlassöffnung 10 dient gleichzeitig als eine Dampfauslassöffnung, so dass also die Durchlassöffnung 10 eine kombinierte Durchlassöffnung für Wasser und Dampf (in unterschiedliche Richtungen) bildet.

Die Durchlassöffnung 10 wird hier mittels eines Schlauchs 13 gebildet, welcher formschlüssig, kraftschlüssig und/oder stoffschlüssig in eine eng passende Aussparung in der Gargerätemuffel 2 eingepasst ist. Alternativ kann z.B. ein festes Rohr oder Rohrsystem verwendet werden.

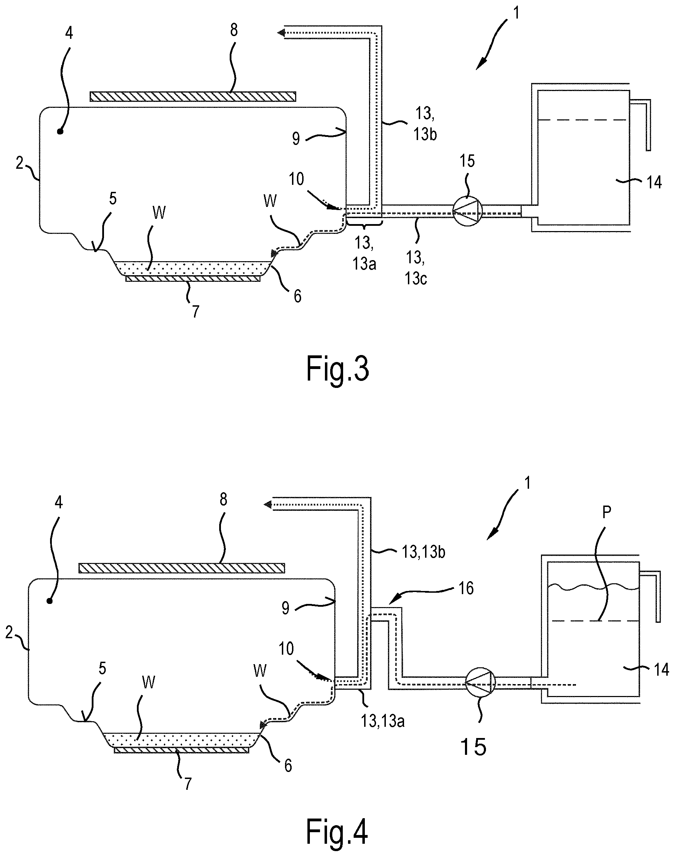

**Fig.3** zeigt als Schnittdarstellung in Vorderansicht eines Gargerätes 1 mit einer kombinierten Dampf/Wasser-Führung gemäß einer Ausgestaltung die nicht zum Schutzumfang gehört, in einer detaillierteren Darstellung.

Der Schlauch 13 dient als ein kombinierter Wasser- und Dampfführungs-Schlauch. Der Schlauch 13 weist hinter der Durchlassöffnung 10 einen kombinierten Dampf/Wasser-Führungsabschnitt 13a auf, wobei sich der Dampf/Wasser-Führungsabschnitt 13a in einer vorbestimmten Entfernung von der Durchlassöffnung 10 in einen Dampfablasszweig 13b und einen Wasserführungszweig 13c aufteilt. Der Dampfablasszweig 13b führt nach Außen, ggf. über ein Abzugsgebläse (o.Abb.). Der Dampfablasszweig 13b geht von dem Wasserführungszweig 13c nach oben ab. Während in dem Garraum 4 befindlicher Dampf somit über den Dampf/Wasser-Führungsabschnitt 13a und den Dampfablasszweig 13b nach Außen abgeführt werden kann, kann Wasser W von einem Wasserreservoir 14 über eine Pumpe 15 durch den Wasserführungszweig 13c und durch den Dampf/Wasser-Führungsabschnitt 13a in den Garraum 4 geleitet werden. Der Dampf/Wasser-Führungsabschnitt 13a kann also gleichzeitig Wasser W und Dampf D führen, insbesondere in gegenläufiger Richtung. Bei einem ausreichend höherliegenden Wasserreservoir 14 kann auch auf die Pumpe verzichtet werden und/oder anstelle der Pumpe 15 z.B. ein Ventil vorgesehen sein. Anstelle des Wasserreservoirs 14 kann auch ein Frischwasseranschluss, o.ä. verwendet werden.

**Fig.4** zeigt als Schnittdarstellung in Vorderansicht das Gargerät 1 mit einer kombinierten Dampf/Wasser-Führung gemäß der erfindungsgemäßen Ausgestaltung. In dieser Ausgestaltung wird der wasserführende Teil des Schlauchs 13, welcher sich aus dem kombinierten Dampf/Wasser-Führungsabschnitt 13a und dem Wasserführungszweig 13c zusammensetzt, umgekehrt U-förmig geführt und weist einen Scheitelpunkt 16 auf, welcher höher liegt als ein maximaler Wasserpegel P des Wasserreservoirs 14. So kann ein unbeabsichtigter Fluss von Wasser W in den Garraum 4 bei einer deaktivierten und in diesem Zustand nicht dichtenden Pumpe 15 verhindert werden. Der Scheitelpunkt 16 wird bevorzugt durch den oder in dem Wasserführungszweig 13c gebildet.

Bei beiden Ausgestaltungen der kombinierten Dampf/Wasser-Führung ergibt sich der Vorteil, dass der Dampf/Wasser-Führungsabschnitt 13a wie ein Wärmetauscher zwischen dem Dampf und dem Wasser wirkt und erstens das Wasser W vorwärmt, was eine Energieeinsparung bewirkt, und zweitens den Dampf zumindest teilweise kondensiert und so hilft, Wasser einzusparen.

### Bezugszeichenliste

- 1: Dampfgargerät
- 2: Gargerätemuffel
- 3: Tür
- 4: Garraum
- 5: Boden der Gargerätemuffel
- 6: Wasseraufnahmebereich
- 7: Heizung
- 8: Oberhitze
- 9: Seitenwand der Gargerätemuffel
- 10: Durchlassöffnung
- 11: Auflage
- 12: Auflage
- 13: Schlauch
- 13a: Dampf/Wasser-Führungsabschnitt
- 13b: Dampfablasszweig
- 13c: Wasserführungszweig
- 14: Wasserreservoir
- 15: Pumpe
- 16: Scheitelpunkt
- W: Wasser
- P: Wasserpegel

## Patentansprüche

1. Dampfgargerät (1), aufweisend eine Gargerätemuffel (2), welche einen mit Dampf beaufschlagbaren Garraum (4) begrenzt, wobei sich mindestens eine Wassereinlassöffnung und mindestens eine Dampfauslassöffnung in den Garraum (4) öffnen, wobei
- die mindestens eine Wassereinlassöffnung und die mindestens eine Dampfauslassöffnung ineinander in einer kombinierten Durchlassöffnung (10) integriert sind,
- die kombinierte Durchlassöffnung (10) mittels eines Fluidkanals (13) gebildet wird, welcher hinter der Durchlassöffnung (10) einen kombinierten Dampf/Wasser-Führungsabschnitt (13a) aufweist,
- welcher Dampf/Wasser-Führungsabschnitt (13a) sich in einen Dampfablasszweig (13b) und eine Wasserführungszweig (13c) aufteilt,
- der Wasserführungszweig (13c) und/oder der Dampf/Wasser-Führungsabschnitt (13a) einen Scheitelpunkt (16) bilden, welcher höher liegt als ein maximal erlaubter Wasserpegel (P) des Wasserreservoirs (14) und
- das Dampfgargerät (1) eine Pumpe (15) umfasst und der Wasserführungszweig (13c) über die Pumpe (15) mit einem Wasserreservoir (14) verbunden ist,
**dadurch gekennzeichnet, dass**
- die Pumpe (15) dazu vorgesehen ist, Wasser aus dem Wasserreservoir (14) durch den Wasserführungszweig (13c) bis zu dem Scheitelpunkt (16) zu pumpen.

2. Dampfgargerät (1) nach Anspruch 1, **dadurch gekennzeichnet, dass** der Fluidkanal mittels eines Schlauchs (13) gebildet wird.

3. Dampfgargerät (1) nach einem der vorhergehenden Ansprüche, **dadurch gekennzeichnet, dass** eine Wand, an welcher die Durchlassöffnung (10) angeordnet ist, eine Seitenwand (9) ist.

4. Dampfgargerät (1) nach einem der vorhergehenden Ansprüche, **dadurch gekennzeichnet, dass** die Durchlassöffnung (10) garraumseitig im Wesentlichen flächenbündig zu einer sie umgebenden Wand (9) der Gargerätemuffel (2) angeordnet ist.

5. Dampfgargerät (1) nach einem der vorhergehenden Ansprüche, **dadurch gekennzeichnet, dass** die Durchlassöffnung (10) hinter einem in den Garraum (4) ragenden Körper (11) angeordnet ist.

6. Dampfgargerät (1) nach einem der Ansprüche 3 und 5, **dadurch gekennzeichnet, dass** der Körper (11) eine Auflage für einen Gargutträger ist.

## Claims

1. Steam cooking appliance (1), having a cooking appliance muffle (2), which delimits a cooking compartment (4) which can have steam applied to it, wherein at least one water inlet opening and at least one steam outlet opening open into the cooking compartment (4),
wherein
- the at least one water inlet opening and the at least one steam outlet opening are mutually integrated in a combined through-opening (10),
- the combined through-opening (10) is formed by means of a fluid channel (13), which has a combined steam/water guide section (13a) behind the through-opening (10),
- which steam/water guide section (13a) divides into a steam exhaust branch (13b) and a water guide branch (13c),
- the water guide branch (13c) and/or the steam/water guide section (13a) form an apex (16), which lies at a higher level than a maximum permissible water level (P) of the water reservoir (14) and
- the steam cooking appliance (1) comprises a pump (15) and the water guide branch (13c) is connected to a water reservoir (14) by way of the pump (15),
**characterised in that**
- the pump (15) is provided to pump water out from the water reservoir (14) through the water guide branch (13c) as far as the apex (16).

2. Steam cooking appliance (1) according to claim 1, **characterised in that** the fluid channel is formed by means of a hose (13).

3. Steam cooking appliance (1) according to one of the preceding claims, **characterised in that** a wall on which the through-opening (10) is arranged is a side wall (9).

4. Steam cooking appliance (1) according to one of the preceding claims, **characterised in that** the through-opening (10) is arranged on the cooking compartment side essentially flush with a wall (9) of the cooking appliance muffle (2) which surrounds the same.

5. Steam cooking appliance (1) according to one of the preceding claims, **characterised in that** the through-opening (10) is arranged behind a body (11) which projects into the cooking compartment (4).

6. Steam cooking appliance (1) according to one of claims 3 and 5, **characterised in that** the body (11) is a support for a food carrier.

## Revendications

1. Appareil de cuisson à la vapeur (1), présentant un moufle d'appareil de cuisson (2), lequel délimite un espace de cuisson (4) pouvant être alimenté en vapeur, dans lequel au moins un orifice d'entrée d'eau et au moins un orifice de sortie de vapeur s'ouvrent dans l'espace de cuisson (4), dans lequel
- l'au moins un orifice d'entrée d'eau et l'au moins un orifice de sortie de vapeur sont intégrés l'un à l'autre en un orifice de passage combiné (10),
- l'orifice de passage combiné (10) est constitué au moyen d'un conduit à fluide (13), lequel présente derrière l'orifice de passage (10) une section de guidage de vapeur/d'eau combinée (13a),
- laquelle section de guidage de vapeur/d'eau (13a) se subdivise en une branche d'émission de vapeur (13b) et une branche de guidage d'eau (13c)
- la branche de guidage d'eau (13c) et/ou la section de guidage de vapeur/d'eau (13a) constitue(nt) une extrémité (16) supérieure à un niveau d'eau maximal autorisé (P) d'un réservoir d'eau (14) et l'appareil de cuisson à la vapeur (1) comprend une pompe (15) et la branche de guidage d'eau (13c) est reliée via la pompe (15) à un réservoir d'eau (14),
**caractérisé en ce que**
- la pompe (15) est prévue afin de pomper de l'eau hors du réservoir d'eau (14) à travers la branche de guidage d'eau (13c), jusqu'à l'extrémité (16).

2. Appareil de cuisson à la vapeur (1) selon la revendication 1, **caractérisé en ce que** le conduit à fluide est constitué à l'aide d'un tuyau (13).

3. Appareil de cuisson à la vapeur (1) selon l'une des revendications précédentes, **caractérisé en ce qu'**une paroi sur laquelle l'orifice de passage (10) est disposé est une paroi latérale (9).

4. Appareil de cuisson à la vapeur (1) selon l'une des revendications précédentes, **caractérisé en ce que** l'orifice de passage (10) est disposé, côté espace de cuisson, essentiellement à fleur de surface avec une paroi (9) du moufle d'appareil de cuisson (2) l'entourant.

5. Appareil de cuisson à la vapeur (1) selon l'une des revendications précédentes, **caractérisé en ce que** l'orifice de passage (10) est disposé derrière un corps (11) faisant saillie dans l'espace de cuisson (4).

6. Appareil de cuisson à la vapeur (1) selon l'une des revendications 3 et 5, **caractérisé en ce que** le corps (11) est un appui pour un support de denrées à cuire.
